# FASCICULE DE BREVET EUROPEEN

(11) **EP 1 182 135 B1**
(45) Date de publication et mention de la délivrance du brevet: **26.03.2003**
(21) Numéro de dépôt: 01402165.3
(22) Date de dépôt: 13.08.2001
(51) Int. Cl.: B64D 11/00

(54) **Boîte à masques respiratoires de secours**
Behälter für Notsauerstoffmasken
Emergency oxygen mask box

(30) Priorité: 17.08.2000 FR 0010676
(43) Date de publication de la demande: 27.02.2002
(73) Titulaire: Intertechnique, 78373 Plaisir Cedex (FR)
(72) Inventeur: Martinez, Patrice, 78373 Plaisir Cédex (FR)
(74) Mandataire: Fort, Jacques

(56) Documents cités:
- FR-A- 1 214 998
- US-A- 3 073 301

## Description

La présente invention concerne les boîtes de réception de masques respiratoires utilisées à bord des avions pour recevoir des masques de passager. Une telle boîte comporte généralement une carcasse ou boîtier qui contient un réseau de distribution d'oxygène à partir d'une conduite générale ou d'un générateur chimique, une porte placée sous la boîte lorsque celle-ci est en place et des moyens de verrouillage de la porte qui sont désarmables, par exemple par alimentation du réseau à une pression supérieure à un seuil déterminé ou par une commande électrique. Le seuil de pression d'alimentation est choisi de façon que le débit d'oxygène fourni aux passagers assure leur survie pendant le temps nécessaire pour arriver à une altitude de sécurité à partir de l'altitude maximale de croisière de l'avion. Ce seuil est généralement compris entre 3 et 4 bars.

Une boîte de réception de masques respiratoires, ayant les caractéristiques du préambule de la revendication 1 est connue par example du brevet FR-A- 1214998.

Les masques sont généralement posés sur la porte de façon à tomber lors d'une ouverture de la porte et n'être alors plus reliés à la boîte que par leur tube flexible d'alimentation et par un cordon de tirage permettant d'ouvrir le robinet individuel d'amenée d'oxygène au masque.

Le rangement correct de plusieurs masques dans une même boîte est délicat et il prend beaucoup de temps. Les masques doivent tomber à coup sûr lors de l'ouverture de la porte d'une boîte, sans que leurs tubes flexibles d'alimentation ne s'emmêlent. Il n'est pas possible de serrer les masques dans des alvéoles de retenue lors du rangement, car ils risqueraient de ne pas tomber lors de l'ouverture de la boîte.

L'invention vise à fournir une boîte facilitant le rangement des masques sans gêner leur libération.

Elle propose dans ce but une boîte caractérisée en ce que la face interne de la porte ou de la carcasse est munie de moyens d'appui définissant une position de retenue de chaque masque et de verrous déplaçables, par fermeture de la porte, d'une position où ils délimitent des alvéoles de retenue des masques à une position où ces verrous libèrent les masques.

Les verrous peuvent être indépendants, ce qui permet de raccorder et de mettre en place successivement tous les masques sans que ceux qui sont déjà montés ne gênent l'introduction des autres ou ne risquent de tomber. Toutefois, ces verrous peuvent être tous reliés entre eux, les masques étant alors introduits à force pour les coincer dans les alvéoles. Dans les deux cas, une façon commode de déplacer les verrous lors de la fermeture consiste à les munir de moyens de maintien élastique dans la position où ils définissent les alvéoles et de prévoir, sur le boîtier ou carcasse de la boîte, des moyens formant une came qui repousse les verrous en surmontant la force de retenue des moyens élastiques lors de la fermeture de la porte.

Les caractéristiques ci-dessus, ainsi que d'autres, apparaîtront mieux à la lecture de la description qui suit d'un mode particulier de réalisation, donné à titre d'exemple non limitatif et de la comparaison qui est faite avec une boîte à masques classique. La description se réfère aux dessins qui l'accompagnent, dans lesquels :
- la figure 1 montre schématiquement, en perspective, les principaux éléments d'une boîte à masques d'usage courant ;
- les figures 2 et 3 sont des vues en perspective très simplifiées, montrant les éléments concernés par l'invention, les verrous étant placés dans la position où ils définissent des alvéoles de maintien de masques.

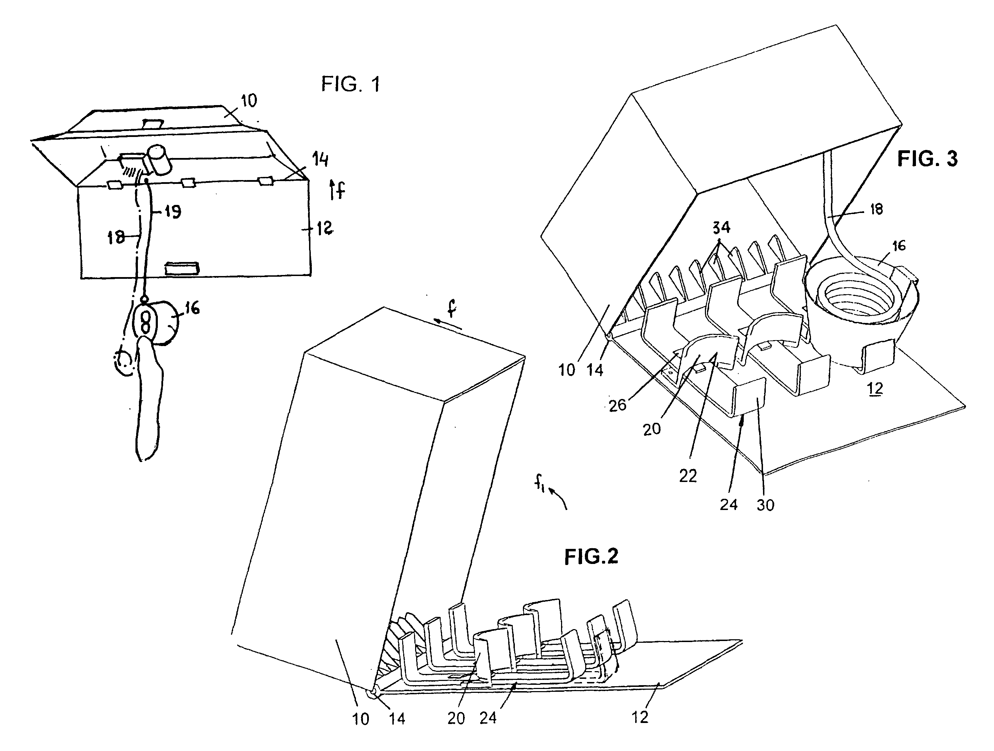

La boîte montrée en figure 1 est à alimentation par un réseau d'oxygène de bord. Elle comporte un boîtier ou carcasse 10 qui, lorsque la boîte est montée dans un avion, est placé de façon que la direction indiquée par la flèche f soit sensiblement verticale. La boîte comporte également une porte 12 articulée sur le châssis autour d'un axe 14. Le boîtier et la porte sont munis de moyens de retenue de la porte qui peuvent avoir une constitution classique. Ces moyens de retenue sont commandés dans le sens de l'ouverture pneumatiquement, lorsque la pression dans la conduite d'alimentation atteint une valeur déterminée, ou électriquement. Le boîtier porte également un réseau d'alimentation en oxygène à partir d'une conduite générale, non représenté. Ce réseau est séparé de la conduite par un clapet anti-retour qui s'ouvre lorsque la surpression dans la conduite générale atteint une valeur déterminée, généralement comprise entre 3 et 4 bars. Chaque masque, tel que le masque 16 seul représenté sur la figure 2, est relié à un embout appartenant au réseau par une conduite souple 18 et un robinet qui s'ouvre en cas de traction sur un cordon 19 relié au masque. Pour cela le cordon est attaché à une goupille de retenue du robinet d'alimentation du masque en position de fermeture. Lorsque la boîte est alimentée par un générateur chimique, une traction sur le clapet actionne un percuteur de déclenchement.

La boîte représentée sur la figure 1 est destinée à recevoir'trois masques, dont un seul est représenté, mais ce nombre n'est pas limitatif. En général, chaque boîte contient autant de masques qu'il y a de sièges dans la rangée desservie, plus un.

Un emplacement est prévu pour recevoir chacun des masques et pour le maintenir temporairement, jusqu'à fermeture de la boîte.

La boîte suivant l'invention représentée en figures 2 et 3 a une constitution générale similaire à celle qui vient d'être décrite. Les moyens de retenue peuvent cependant être du genre décrit dans la demande de brevet déposée le même jour que la présente demande pour "Boîte à masques respiratoires pour installation de secours". Chaque emplacement est défini par un moyen d'appui 20 formé, dans le mode de réalisation illustré, par une coupelle en arc de cercle fixée à la porte par des moyens quelconques tels que des rivets. Une échancrure inférieure 22 de la coupelle est prévue pour livrer passage à un verrou 24 destiné à retenir un masque 16 par serrage. Chacun des verrous représentés sur les figures présente une forme en U. Le fond de l'U est plat et coulisse contre la porte. Il porte une lame élastique 26 destinée à retenir le verrou dans la position montrée en figure 23 où la branche avant 30 du verrou serre un masque contre la coupelle d'appui 20. La branche arrière 32 du verrou est placée en face de saillies 34 portées par le boîtier et constituant des cames qui, lors de la phase finale du déplacement de la porte dans le sens f1 de fermeture, repoussent les verrous et libèrent les masques.

Le rangement des masques s'effectue en conséquence de la façon suivante. L'opérateur avance les verrous jusqu'à la position montrée en tirets sur la figure 2. IL range chaque masque à son tour et le bloque immédiatement en repoussant le verrou jusqu'à la position montrée en figures 2 et 3.

Il peut également placer initialement tous les verrous dans la position montrée en figure 2 et engager les masques à force dans les alvéoles . Ce dernier mode d'utilisation doit être adopté lorsque tous les verrous appartiennent à une même pièce.

Une fois tous les masques en place, l'opérateur referme la porte ce qui débloque tous les masques.

La disposition qui vient d'être décrite peut être inversée, les réceptacles de masques étant dans la carcasse tandis que les cames sont placées sur la porte.

La boîte peut comporter de plus une prise dite de « first aid » permettant d'alimenter un masque individuel pour fournir de l'oxygène à un passager victime d'un malaise. Dans ce cas, et lorsque la boîte est à alimentation par un réseau de bord, la fourniture d'oxygène à cette prise peut se faire par les moyens décrits dans la demande de brevet français mentionnée plus haut.

## Revendications

1. Boîte de réception (10) de masques respiratoires de secours (16) ayant une carcasse (10) qui contient un réseau de distribution d'oxygène à partir d'une conduite générale ou d'un générateur chimique, une porte (12) placée sous la boîte lorsque la porte (12) est en place et des moyens désarmables de verrouillage de la porte (12), **caractérisée en ce que** la face interne de la porte (12) ou de la carcasse (10) est munie de moyens d'appui (20) définissant une position de retenue de chaque masque (16) et de verrous déplaçables (24), par fermeture de la porte (12), d'une position où ils délimitent des alvéoles de retenue des masques (16) à une position où les verrous (24) libèrent les masques (16).

2. Boîte à masques respiratoires suivant la revendication 1, **caractérisée en ce que** chaque alvéole est défini par un moyen d'appui (20) et par un verrou coulissant (24) destiné à retenir un masque (16) par serrage contre le moyen d'appui (20).

3. Boîte à masques respiratoires suivant la revendication 2, **caractérisée en ce que** chaque moyen d'appui (20) est formé par une coupelle en arc de cercle fixée à la porte (12).

4. Boîte à masques respiratoires suivant la revendication 3,**caractérisée en ce que** chaque coupelle présente une échancrure inférieure (22) prévue pour livrer passage à un des verrous (24).

5. Boîte à masques respiratoires suivant la revendication 3, **caractérisée en ce que** chacun des verrous (24) présente une forme en U à fond plat coulissant contre la porte (12).

6. Boîte à masques respiratoires suivant la revendication 5, **caractérisée en ce que** le fond porte une lame élastique (26) destinée à retenir le verrou (24) dans la position où une branche avant (30) du verrou serre un masque (16) contre la coupelle d'appui (20).

7. Boîte à masques respiratoires suivant la revendication 1, 2 ou 3, **caractérisée en ce que** tous les verrous (24) appartiennent à une même pièce.

8. Boîte à masques respiratoires suivant l'une quelconque des revendications précédentes, **caractérisée en ce que** la carcasse présente des saillies (34) portées par le boîtier et constituant des cames qui, lors de la phase finale de fermeture de la porte (12), désarment les verrous et libèrent les masques.

## Claims

1. A storage box (10) for emergency breathing masks (16) having a housing (10) which contains a network for distributing oxygen from a general pipe or from a chemical generator, a door (12)placed beneath the box when the door (12) is in position, and means apt to be disabled for locking the door (12), **characterized in that** an inside face of the door (12) or of the housing (10)is provided with rest means defining a retaining position for each mask (16) and with latches (24) that are displaceable responsive to closing the door (12)from a position in which they define mask-retaining sockets to a position in which the latches (24) release the masks (16).

2. A box for breathing masks according to claim 1, **characterized in that** each socket is defined by rest means (20) and by a slidable said latch (24) which is apt to retain one mask (16) by clamping said mask against the rest means (20).

3. A box for breathing masks according to claim 2, **characterized in that** each of said rest means (20)comprises a circularly arcuate member fixed to the door (12).

4. A box for breathing masks according to claim 3, **characterized in that** said arcuate member is formed with a bottom slot(22)allowing one latch (24)to pass through.

5. A box for breathing masks according to claim 3, **characterized in that** each of the latches (24)is U-shaped with a flat web slidable against and along the door (12).

6. A box for breathing masks according to claim 5, **characterized in that** the web carries a spring blade (26)for retaining the latch (24)in a position where a front branch (30) of the latch clamps one mask (16) against the arcuate member (20).

7. A box for breathing masks according to claim 1,2 or 3, **characterized in that** all said latches (24) belong to a single piece.

8. A box for breathing masks according to any one of the preceding claims, **characterized in that** the housing has projections (34) carried by the housing and constituting cams arranged for disabling the latches and freeing the masks upon a final phase of closure of the door (12).

## Patentansprüche

1. Behälter (10) für die Bereitstellung von Notsauerstoffmasken (16), der ein Gehäuse (10), das ein Abgabenetz für Sauerstoff aus einer allgemeinen Leitung oder einem chemischen Generator enthält, einen Deckel (12), der unter dem Gehäuse angeordnet ist, wenn er sich an seiner Stelle befindet, und lösbare Verriegelungsmittel für den Deckel (12) besitzt, **dadurch gekennzeichnet, dass** die Innenseite von Deckel (12) oder Gehäuse (10) mit Auflagemitteln (20), die für die Notsauerstoffmasken (16) eine Halteposition bilden, und Halterungen (24) versehen ist, die durch Verschließen des Deckels (12) von einer Position, in welcher sie Aufnahmeplätze für die Notsauerstoffmasken (16) begrenzen, bis in eine Position, in welcher die Halterungen (24) die Notsauerstoffinasken (16) freigeben, beweglich sind.

2. Behälter für Notsauerstoffinasken nach Anspruch 1, **dadurch gekennzeichnet, dass** die Aufnahmeplätze jeweils von einem Auflagemittel (20) und einer hin- und herbeweglichen Halterung (24) gebildet werden, die vorgesehen ist, eine Notsauerstoffinaske (16) durch Drücken an das Auflagemittel (20) festzuhalten.

3. Behälter für Notsauerstoffinasken nach Anspruch 2, **dadurch gekennzeichnet, dass** die Auflagemittel (20) jeweils von einer am Deckel (12) befestigten kreisbogenförmigen Schelle gebildet werden.

4. Behälter für Notsauerstoffmasken nach Anspruch 3, **dadurch gekennzeichnet, dass** die Schellen jeweils einen unteren bogenförmigen Ausschnitt (22) aufweisen, der vorgesehen ist, einen Durchgang für eine Halterung (24) zu ergeben.

5. Behälter für Notsauerstoffinasken nach Anspruch 3, **dadurch gekennzeichnet, dass** die jeweilige Halterung (24) U-förmig mit einem flachen Boden und am Deckel (12) hin- und herbeweglich ist.

6. Behälter für Notsauerstoffinasken nach Anspruch 5, **dadurch gekennzeichnet, dass** der Boden eine elastische Zunge (26) trägt, die vorgesehen ist, die Halterung (24) in der Position, in welcher deren vorderer Schenkel (30) eine Notsauerstoffmaske (16) an die Auflageschelle (20) drückt, zu halten.

7. Behälter für Notsauerstoffmasken nach Anspruch 1, 2 oder 3, **dadurch gekennzeichnet, dass** sämtliche Halterungen (24) zu ein und demselben Bauteil gehören.

8. Behälter für Notsauerstoffmasken nach einem der vorhergehenden Ansprüche, **dadurch gekennzeichnet, dass** das Gehäuse Vorsprünge (34) aufweist, die vom Behälter getragen werden und Nocken bilden, die in der Endphase des Verschließens des Deckels (12) die Halterungen lösen und die Notsauerstoffmasken freigeben.
